# FASCICULE DE BREVET EUROPEEN

(11) **EP 4 341 143 B1**
(45) Date de publication et mention de la délivrance du brevet: **05.03.2025**
(21) Numéro de dépôt: 22721814.6
(22) Date de dépôt: 11.04.2022
(51) Int. Cl.: B60W 30/18, B60W 30/12

(54) **PROCÉDÉ ET DISPOSITIF D'AIDE À LA CONDUITE D'UN VÉHICULE CIRCULANT SUR UNE VOIE DE CIRCULATION**
VERFAHREN UND VORRICHTUNG ZUR UNTERSTÜTZUNG DES FAHRENS EINES FAHRZEUGS IN EINER FAHRSPUR
METHOD AND DEVICE FOR ASSISTING WITH DRIVING A VEHICLE BEING DRIVEN IN A TRAFFIC LANE

(30) Priorité: 19.05.2021 FR 2105209
(43) Date de publication de la demande: 27.03.2024
(73) Titulaire: Stellantis Auto SAS, 78300 Poissy (FR)
(72) Inventeur: ABOUESSIRE, Ismail, Marrakech, 40160 (MA); ABOULISSANE, Badreddine, Taroudant, 83350 (MA); RAJI, Zineb, Marrakech, 40000 (MA); AIT ALI, Meriem, Casablanca, 20580 (MA); LAHLOU, Zoubida, Casablanca, 20190 (MA)
(74) Mandataire: ESIP
(86) Numéro de dépôt international: PCT/FR2022/050671
(87) Numéro de publication internationale: WO 2022/243617

(56) Documents cités:
- EP-A1- 3 552 897
- EP-A2- 1 840 000
- US-A1- 2018 037 260
- US-A1- 2018 201 314

## Description

### Domaine technique de l'invention

La présente invention concerne des procédés et dispositifs d'aide à la conduite d'un véhicule circulant sur une voie de circulation. La présente invention concerne également un programme d'ordinateur comportant des instructions pour la mise en œuvre des procédés, un support d'enregistrement lisible par un ordinateur sur lequel est enregistré un programme d'ordinateur comprenant des instructions pour l'exécution des étapes des procédés et un véhicule comprenant un dispositif d'aide à la conduite.

### Arrière-plan technologique

Certains véhicules contemporains sont équipés de système(s) d'aide à la conduite avancée, dit(s) ADAS (de l'anglais « Advanced Driver-Assistance System »). Les systèmes ADAS sont classés en fonction de différents niveaux d'autonomie d'un véhicule. Par exemple, le classement établi par la SAE (de l'anglais *Society of Automotive Engineers*) est composé de six différents niveaux, qui vont de la conduite qui nécessite l'intervention totale du conducteur à la conduite 100% automatisée.
- Le niveau 0 nécessite la surveillance totale de tous les aspects de la conduite ;
- Le niveau 1 offre une aide à la conduite qui permet un contrôle de direction ou d'accélération et décélération ;
- Le niveau 2 permet une automatisation partielle avec un ou plusieurs systèmes d'aide à la conduite qui contrôlent aussi bien les fonctions de direction que d'accélération et de décélération ;
- Le niveau 3 permet le contrôle de tous les aspects de la conduite dynamique, mais nécessite l'intervention du conducteur de manière appropriée lorsqu'il lui est demandé d'intervenir ;
- Le niveau 4 permet le contrôle de tous les aspects de la conduite dynamique, même quand le conducteur ne réagit pas de manière appropriée ; et
- Le niveau 5 permet le contrôle en tout temps de tous les aspects de la conduite dynamique par un être humain, et ce, pour toutes les conditions routières.

Les systèmes ADAS les plus communément mis en place dans les véhicules actuels permettent le maintien sur une voie de circulation (LKA, de l'anglais « Lane Keeping Assist »), le déclenchement d'alerte lors de changement de voie involontaire (LDW de l'anglais « Lane Departure Warning »), le déclenchement d'alerte de collision imminente (FCA de l'anglais « Forward Collision Assist »). On peut aussi citer les systèmes d'assistance de maintien du véhicule dans une voie de circulation (LPA de l'anglais « Lane Positioning Assist »), les systèmes semi-automatiques de changement de voie de circulation (SALC de l'anglais « Semi Automatic Lane Change »), les systèmes d'aide au freinage antiblocage (ABS de l'allemand « *Antoblockiertsystem* »), les systèmes d'assistance au freinage d'urgence (AEBC de l'anglais « Advances Emergency Braking »), les systèmes de correction électronique de trajectoire (ESP de l'anglais Electronic Stability Program en anglais) ou encore les régulateurs de vitesse adaptatifs (ACC de l'anglais « Adaptive Cruise Control »).

Certains systèmes ADAS peuvent interférer avec d'autres et le comportement d'un système ADAS peut dépendre du comportement d'un autre. C'est le cas, par exemple du système de maintien du véhicule dans une voie de circulation (système LPA) sur le système semi-automatique de changement de voie de circulation (système SALC).

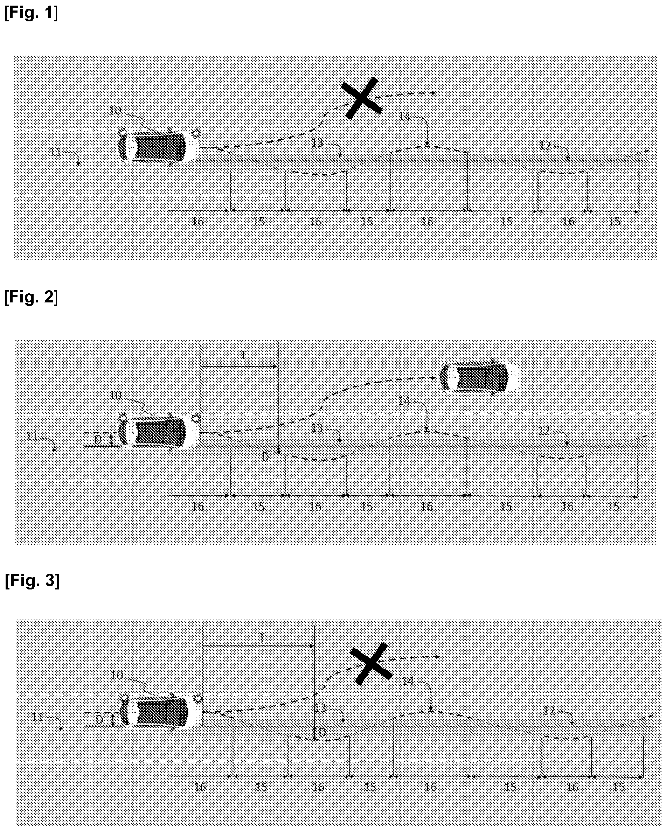

En effet, suite à une demande de changement de voie de circulation, par exemple par actionnement d'un clignotant, un système SALC vérifie un certain nombre de conditions avant de suggérer à un conducteur du véhicule de changer de voie de circulation pour, par exemple, dépasser un véhicule qui le précède puis revenir sur la voie de circulation initiale. L'une de ces conditions est que le véhicule suive une consigne de trajectoire déterminée par le système LPA. Toutefois, selon les performances des systèmes LPA, la trajectoire réelle du véhicule peut osciller autour d'une consigne de trajectoire tel qu'illustré sur la figure 1. Sur la figure 1, un véhicule 10 circule sur une voie de circulation 11 selon une consigne de trajectoire 12 (ici rectiligne) définie par un système LPA. D'autres consignes de trajectoire peuvent être envisagées (courbe par exemple). La position du véhicule 10 oscille autour de la consigne de trajectoire 12 selon une courbe 14 (en pointillé). Tant que la courbe 14 reste dans une zone 13 (grisée) autour de la consigne de trajectoire 12 (zones référencées 15 sur la figure 1), le système SALC embarqué du véhicule reste actif c'est-à-dire qu'il vérifie des conditions de changement de voie de circulation pour suggérer ce changement. Par contre, lorsque la courbe 14 sort de la zone 13 (zones référencées 16 sur la figure 1), le système SALC est désactivé, c'est-à-dire qu'il ne vérifie plus ces conditions et ne suggère donc plus de changement de voie de circulation. Le véhicule 10 peut changer de voie de circulation mais sans l'assistance du système SALC. Ce dernier cas est représenté sur la figure 1 : le véhicule 10 se situe dans une zone 16 au moment où une demande de changement de voie de circulation est demandée (clignotants allumés). Le système SALC est désactivé (croix sur la trajectoire de changement de voie de circulation).

Les oscillations du véhicule 10 autour de la consigne de trajectoire induisent donc des activations et des désactivations intermittentes du système SALC.

En outre, l'état de la technique est connu des documents EP3552897A1 et EP1840000A2.

Le problème est d'améliorer le fonctionnement du système SALC malgré les oscillations du véhicule autour d'une consigne de trajectoire de ce véhicule circulant sur une voie de circulation.

### Résumé de La présente invention

Un objet de la présente invention est d'améliorer les systèmes d'aide à la conduite d'un véhicule circulant sur une voie de circulation.

Un autre objet de la présente invention est d'améliorer le fonctionnement d'un système semi-automatique de changement de voie de circulation.

Un autre objet de la présente invention est d'augmenter la sécurité routière.

Selon un premier aspect, la présente invention concerne un procédé d'aide à la conduite d'un véhicule circulant sur une voie de circulation, ledit procédé étant mis en œuvre par au moins un processeur, ledit procédé comprenant les étapes suivantes : demande de changement de voie de circulation du véhicule ; obtention d'une position du véhicule par rapport à une consigne de trajectoire du véhicule le long de la voie de circulation sur laquelle circule le véhicule ; si une distance entre la position du véhicule et la consigne de trajectoire est supérieure à une marge d'erreur, obtention d'une position du véhicule par rapport à la consigne de trajectoire du véhicule après expiration d'une durée de temps ; et si une distance entre la position du véhicule obtenue après expiration de la durée de temps et la consigne de trajectoire est inférieure à la marge d'erreur, confirmation de la demande de changement de voie de circulation.

Selon un exemple particulier et non limitatif, un changement de voie du véhicule est assisté par un système de changement de voie activé.

Selon un exemple particulier et non limitatif, le procédé comporte en outre une étape d'activation du système de changement de voie tant que la distance est inférieure à la marge d'erreur et une étape de désactivation du système de changement de voie tant que la distance est supérieure à la marge d'erreur.

Selon un exemple particulier et non limitatif, le système de changement de voie est basé sur une détection de marquage au sol bordant la voie de circulation.

Selon un exemple particulier et non limitatif, la consigne de trajectoire est obtenue à partir d'un système de maintien du véhicule dans une voie de circulation.

Selon un exemple particulier et non limitatif, le système de maintien du véhicule du véhicule dans une voie de circulation est basé sur une détection de marquage au sol bordant la voie de circulation.

Selon un deuxième aspect, la présente invention concerne un dispositif d'aide à la conduite d'un véhicule circulant sur une voie de circulation, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation non limitatifs de la présente invention ci-après, en référence aux figures 1 à 5 annexées, sur lesquelles :
[Fig. 1] illustre schématiquement un changement de voie assisté par un système de changement de voie selon l'état de la technique ;
[Fig. 2] illustre schématiquement un changement de voie assisté par un système de changement de voie selon un exemple particulier et non limitatif de la présente invention ;
[Fig. 3] illustre schématiquement un changement de voie non assisté par un système SALC selon un exemple particulier et non limitatif de la présente invention.
[Fig. 4] illustre schématiquement un dispositif 2 d'aide à la conduite d'un véhicule circulant sur une voie de circulation, selon un exemple de réalisation particulier de la présente invention ; et
[Fig. 5] illustre un organigramme des différentes étapes d'un procédé d'aide à la conduite d'un véhicule circulant sur une voie de circulation, selon un exemple de réalisation particulier de la présente invention.

### Description des exemples de réalisation

Un procédé et un dispositif d'aide à la conduite d'un véhicule circulant sur une voie de circulation vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier de réalisation de la présente invention, lorsqu'une demande de changement de voie de circulation d'un véhicule est demandée, une distance entre une position du véhicule sur la voie de circulation sur laquelle circule ce véhicule et une marge d'erreur autour d'une consigne de trajectoire du véhicule le long de cette voie de circulation, est obtenue. Si une distance est inférieure à une marge d'erreur autour de cette consigne de trajectoire, la demande est confirmée, un système SALC embarqué du véhicule est activé et le véhicule peut changer de voie de circulation avec l'aide de système SALC activé. Si la distance est supérieure à la marge d'erreur, une position du véhicule par rapport à la consigne de trajectoire du véhicule est à nouveau obtenue après expiration d'une durée de temps. Si une distance entre la position du véhicule obtenue après expiration de la durée de temps et la consigne de trajectoire est inférieure à la marge d'erreur, la demande de changement de voie de circulation est confirmée et le système SALC embarqué du véhicule est activé. Sinon, la demande n'est pas confirmée et le système SALC est désactivé.

[Fig. 2] illustre schématiquement un changement de voie assisté par un système SALC selon un exemple particulier et non limitatif de la présente invention.

La figure 2 illustre un environnement routier comprenant par exemple une portion de route à deux voies de circulation. Le véhicule 10 circule sur l'une de ces voies de circulation référencée 11. La voie de circulation 11 est délimitée par une ligne de rive et une ligne de séparation de voies. Les lignes sont ici de type simple et discontinue. La présente invention n'est pas limitée à ce type de ligne mais s'étend à tout type de ligne marquée sur le sol d'une voie de circulation telles que des lignes doubles et/ou continues.

Le véhicule 10 embarque avantageusement un ensemble de capteurs configurés pour obtenir des données sur l'environnement du véhicule 10. Le véhicule 10 embarque par exemple avantageusement un système de détection de marquage au sol. Un tel système comprend une ou plusieurs caméras pour l'acquisition d'images de portion de route. Le système de détection de marquage au sol comporte également des moyens de calculs et de mémoire configurés pour mettre en œuvre un traitement d'image qui est appliqué aux images obtenues de la ou les caméras du système de détection de marquage au sol pour déterminer la présence de ligne marquée sur le sol d'une voie de circulation, et de classifier ces lignes en différents types, par exemple pour déterminer si les lignes correspondent à des lignes de rive ou des lignes de séparation de voie et/ou si ces lignes sont simples ou doubles, continues ou discontinues. Un exemple de traitement d'image pour détecter des lignes marquées sur le sol d'une voie de circulation est décrit dans le document WO2017194890A1.

Le véhicule 10 comporte également des systèmes ADAS dont certains fonctionnent en collaboration avec le système de détection de marquage au sol.

Lorsque l'un de ces système ADAS est activé, par exemple par le conducteur et uniquement si les conditions d'utilisation propres à ce système ADAS sont vérifiées, le système de détection détecte des marquages au sol, notamment les lignes de rive et/ou de séparation de voie. Par exemple, lorsqu'un système LPA embarqué du véhicule 10 est actif, le système de détection détecte des marquages au sol pour que le système LPA détermine une consigne de trajectoire du véhicule 10 le long de la voie de circulation 11 sur laquelle circule le véhicule 10. Par exemple une consigne de trajectoire est une ligne courbe et/ou rectiligne qui sépare la voie de circulation en deux parties.

Dans une première opération, une demande de changement de voie de circulation du véhicule est obtenue. Par exemple, le conducteur peut actionner un clignotant pour formuler une demande de changement de voie de circulation.

Dans une deuxième opération, une position du véhicule 10 est obtenue par rapport à une consigne de trajectoire 12 du véhicule 10 le long de la voie de circulation 11.

Si une distance D entre la position du véhicule 10 et la consigne de trajectoire 12 est supérieure à une marge d'erreur ME, c'est-à-dire que la courbe 14, qui représente la trajectoire réelle du véhicule 10, est en dehors de la zone 13, dans une troisième opération, illustrée à la figure 2, une position du véhicule par rapport à la consigne de trajectoire du véhicule 10 est à nouveau obtenue après expiration d'une durée de temps T. Par exemple, la durée de temps T est de quelques millisecondes.

Si une distance D entre la position du véhicule, obtenue après expiration de la durée de temps T, et la consigne de trajectoire 12 est inférieure à la marge d'erreur ME, dans une quatrième opération, la demande de changement de voie de circulation est confirmée. En effet, tel qu'illustré sur la figure 2, à l'issue de la durée de temps T, le véhicule 10 se trouve dans une zone 15, c'est-à-dire que la courbe 14 est dans la zone 13 autour de la consigne de trajectoire 12.

Selon un exemple de réalisation particulier et non limitatif, le changement de voie du véhicule est assisté par un système SALC activé.

Selon un exemple de réalisation particulier et non limitatif, dans une cinquième opération, optionnelle, le système SALC est activé tant que la distance D est inférieure à la marge d'erreur ME et, dans une sixième opération, optionnelle, le système SALC est désactivé tant que la distance D est supérieure à la marge d'erreur ME.

Selon un exemple de réalisation particulier et non limitatif, le système SALC est basé sur une détection de marquage au sol bordant la voie de circulation.

Selon un exemple de réalisation particulier et non limitatif, la consigne de trajectoire 12 est obtenue à partir d'un système LPA.

Selon un exemple de réalisation particulier et non limitatif, le système LPA est basé sur une détection de marquage au sol bordant la voie de circulation 11.

[Fig. 3] illustre schématiquement un changement de voie non assisté par un système SALC selon un exemple particulier et non limitatif de la présente invention.

Dans la première opération, une demande de changement de voie de circulation du véhicule est obtenue.

Dans la deuxième opération, une position du véhicule 10 est obtenue par rapport à une consigne de trajectoire 12 du véhicule 10 le long de la voie de circulation 11.

Si une distance D entre la position du véhicule 10 et la consigne de trajectoire 12 est supérieure à la marge d'erreur ME, dans la troisième opération, illustrée à la figure 3, une position du véhicule par rapport à la consigne de trajectoire du véhicule 10 est à nouveau obtenue après expiration de la durée de temps T.

Si la distance D entre la position du véhicule 10, obtenue après expiration de la durée de temps T, et la consigne de trajectoire 12 est supérieure à la marge d'erreur ME, c'est-à-dire que la courbe 14, qui représente la trajectoire réelle du véhicule 10, est en dehors de la zone 13, dans la quatrième opération, la demande de changement de voie de circulation n'est pas confirmée et le système SALC est désactivé.

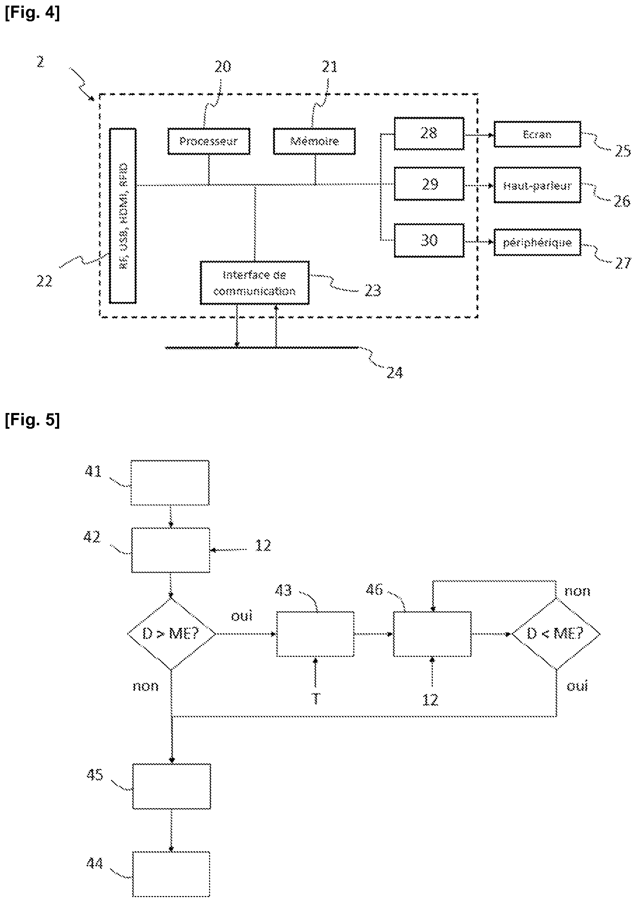

[Fig. 4] illustre schématiquement un dispositif 2 d'aide à la conduite d'un véhicule circulant sur une voie de circulation, selon un exemple de réalisation particulier de la présente invention. Le dispositif 2 correspond par exemple à un dispositif embarqué dans le véhicule 10, par exemple un calculateur.

Le dispositif 2 est par exemple configuré pour la mise en œuvre des opérations décrites en regard des figures 2 à 3 et/ou des étapes du procédé décrit en regard de la figure 5. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), une tablette ou un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un système de détection de marquage au sol, un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données telles que des images ou des informations associées à des lignes marquées sur le sol d'une voie de circulation ou encore des demandes de changement de voie de circulation ou des commandes d'activation/désactivation d'un système SALC sont par exemples chargées vers le dispositif 2 via l'interface du bloc 72 en utilisant un réseau Wi-Fi^{®} tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre exemple de réalisation particulier, le dispositif 2 comprend une interface de communication 23 qui permet d'établir une communication avec d'autres dispositifs (tels que d'autres calculateurs du système embarqué) via un canal de communication 24. L'interface de communication 23 correspond par exemple à un transmetteur configuré pour transmettre et recevoir des informations et/ou des données telles que des images ou des informations associées à des lignes marquées sur le sol d'une voie de circulation, via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Des données telles que des images ou des informations associées à des lignes marquées sur le sol d'une voie de circulation ou encore des demandes de changement de voie de circulation ou des commandes d'activation/désactivation d'un système SALC sont par exemples chargées vers le dispositif 2 via le canal de communication 24 à travers l'interface de communication 23.

Selon un exemple de réalisation particulier supplémentaire, le dispositif 2 peut fournir des signaux de sortie à un ou plusieurs dispositifs externes, tels qu'un écran d'affichage 25, un ou des haut-parleurs 26 et/ou d'autres périphériques 27 (système de projection) via respectivement des interfaces de sortie 28, 29 et 30. Selon une variante, l'un ou l'autre des dispositifs externes est intégré au dispositif 2. L'écran d'affichage 26 correspond par exemple à un écran, tactile ou non.

[Fig. 5] illustre un organigramme des différentes étapes d'un procédé d'aide à la conduite d'un véhicule circulant sur une voie de circulation, selon un exemple de réalisation particulier de la présente invention. Le procédé est par exemple mis en œuvre par le dispositif 2 de la figure 2.

Dans une première étape 41, un changement de voie de circulation du véhicule est demandé.

Dans une deuxième étape 42, une position du véhicule est obtenue par rapport à une consigne de trajectoire du véhicule le long de la voie de circulation sur laquelle circule le véhicule.

Si une distance D entre la position du véhicule et la consigne de trajectoire est supérieure à une marge d'erreur, dans une troisième étape 43, une position du véhicule par rapport à la consigne de trajectoire du véhicule est obtenue après expiration d'une durée de temps.

Si une distance D entre la position du véhicule obtenue après expiration de la durée de temps et la consigne de trajectoire est inférieure à la marge d'erreur ME, dans une quatrième étape 44, la demande de changement de voie de circulation est confirmée.

Selon un exemple de réalisation particulier et non limitatif, dans une cinquième étape 45, optionnelle, le système SALC est activé tant que la distance est inférieure à la marge d'erreur et dans une sixième étape 46, le système SALC est désactivé tant que la distance est supérieure à la marge d'erreur.

Selon une variante de réalisation, les variantes et exemples des opérations décrits en relation avec les figures 2 et 3 s'appliquent aux étapes du procédé de la figure 5.

Bien entendu, la présente invention ne se limite pas aux exemples de réalisation décrits ci-avant mais s'étend à un procédé d'aide à la conduite d'un véhicule circulant sur une voie de circulation qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule à moteur, comprenant le dispositif 2 de la figure 4.

## Revendications

1. Procédé d'aide à la conduite d'un véhicule (10) circulant sur une voie de circulation (11), ledit procédé étant mis en œuvre par au moins un processeur (20), ledit procédé comprenant les étapes suivantes :
- obtention (41) d'une demande de changement de voie de circulation du véhicule ;
- obtention (42) d'une position du véhicule par rapport à une consigne de trajectoire (12) du véhicule le long de la voie de circulation (11) sur laquelle circule le véhicule (10);
- si une distance entre la position du véhicule et la consigne de trajectoire (12) est supérieure à une marge d'erreur, obtention (43) d'une position du véhicule par rapport à la consigne de trajectoire du véhicule après expiration d'une durée de temps ; et
- si une distance entre la position du véhicule obtenue après expiration de la durée de temps et la consigne de trajectoire est inférieure à la marge d'erreur, confirmation (44) de la demande de changement de voie de circulation.

2. Procédé selon la revendication 1, pour lequel un changement de voie du véhicule (10) est assisté par un système de changement de voie activé.

3. Procédé selon la revendication 2, qui comporte en outre une étape d'activation (45) du système de changement de voie tant que la distance est inférieure à la marge d'erreur et une étape de désactivation (46) du système de changement de voie tant que la distance est supérieure à la marge d'erreur.

4. Procédé selon la revendication 3, dans lequel le système de changement de voie est basé sur une détection de marquage au sol bordant la voie de circulation (11).

5. Procédé selon l'une des revendications 1 à 4, pour lequel la consigne de trajectoire (12) est obtenue à partir d'un système de maintien du véhicule (10) dans une voie de circulation (11).

6. Procédé selon la revendication 5, dans lequel le système de maintien du véhicule (10) dans une voie de circulation (11) est basé sur une détection de marquage au sol bordant la voie de circulation.

7. Programme d'ordinateur comportant des instructions pour la mise en œuvre du procédé selon l'une quelconque des revendications précédentes, lorsque ces instructions sont exécutées par un processeur (20).

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (2) d'aide à la conduite d'un véhicule circulant sur une voie de circulation, ledit dispositif (2) comprenant une mémoire (21) associée à au moins un processeur (20) configuré pour la mise en œuvre des étapes du procédé selon l'une quelconque des revendications 1 à 6.

10. Véhicule (10) comprenant le dispositif (2) selon la revendication 9.

## Patentansprüche

1. Verfahren zur Unterstützung des Fahrens eines Fahrzeugs (10), das auf einer Fahrspur (11) fährt, wobei das Verfahren durch mindestens einen Prozessor (20) durchgeführt wird, wobei das Verfahren die folgenden Schritte umfasst:
- Erhalt (41) eines Antrags auf Änderung der Fahrspur;
- Erreichen (42) einer Fahrzeugposition in Bezug auf einen Zielpfad (12) des Fahrzeugs entlang der Fahrspur (11), auf der das Fahrzeug (10) fährt;
- wenn der Abstand zwischen der Fahrzeugposition und der Fahrtrichtungsanzeige (12) größer als eine Fehlermarge ist, Erreichen (43) einer Fahrzeugposition von der Fahrtrichtungsanzeige des Fahrzeugs nach Ablauf einer Zeitspanne und
- Liegt der Abstand zwischen der nach Ablauf der Zeitspanne ermittelten Fahrzeugposition und der Fahrwegvorgabe unter der Fehlermarge, Bestätigung (44) des Antrags auf Spurwechsel.

2. Verfahren nach Anspruch 1, bei dem ein Spurwechsel des Fahrzeugs (10) durch ein aktiviertes Spurwechselsystem unterstützt wird.

3. Verfahren nach Anspruch 2, das des Weiteren einen Schritt des Aktivierens (45) des Kanalwechselsystems umfasst, solange die Entfernung geringer als die Fehlermarge ist, und einen Schritt des Deaktivierens (46) des Kanalwechselsystems, solange die Entfernung größer als die Fehlermarge ist.

4. Verfahren nach Anspruch 3, bei dem das Spurwechselsystem auf einer Erfassung von Bodenmarkierungen an der Fahrspur (11) basiert.

5. Verfahren nach einem der Ansprüche 1 bis 4, bei dem die Fahrwegvorgabe (12) von einem Fahrzeughaltesystem (10) in einer Fahrspur (11) erhalten wird.

6. Verfahren nach Anspruch 5, bei dem das Fahrzeughaltesystem (10) in einer Fahrspur (11) auf einer Erfassung von Bodenmarkierungen an der Fahrspur basiert.

7. Computerprogramm mit Anweisungen zur Durchführung des Verfahrens nach einem der vorhergehenden Ansprüche, wenn diese Anweisungen von einem Prozessor (20) ausgeführt werden.

8. Computerlesbares Aufzeichnungsmedium, auf dem ein Computerprogramm aufgezeichnet ist, das Befehle zum Ausführen der Schritte des Verfahrens nach einem der Ansprüche 1 bis 6 umfasst.

9. Vorrichtung (2) zur Unterstützung des Fahrens eines Fahrzeugs, das auf einer Fahrspur fährt, wobei die Vorrichtung (2) einen Speicher (21) umfasst, der mindestens einem Prozessor (20) zugeordnet ist, der zur Durchführung der Schritte des Verfahrens nach einem der Ansprüche 1 bis 6 konfiguriert ist.

10. Fahrzeug (10) mit der Vorrichtung (2) nach Anspruch 9.

## Claims

1. A method of assisting the driving of a vehicle (10) traveling in a lane (11), the method being performed by at least one processor (20), the method comprising the steps of:
- Receipt (41) of a lane change request;
- Achieving (42) a vehicle position with respect to a target path (12) of the vehicle along the lane (11) on which the vehicle (10) is traveling;
- if the distance between the vehicle position and the direction-of-travel indicator (12) is greater than a margin of error, reaching (43) a vehicle position from the direction-of-travel indicator of the vehicle after a period of time has elapsed, and
- If the distance between the vehicle position determined after the expiry of the time period and the track specification is less than the margin of error, confirmation (44) of the lane change request.

2. A method according to claim 1, in which a lane change of the vehicle (10) is assisted by an activated lane change system.

3. A method according to claim 2, further comprising a step of activating (45) the channel switching system as long as the distance is less than the error margin, and a step of deactivating (46) the channel switching system as long as the distance is greater than the error margin.

4. A method according to claim 3, wherein the lane change system on a detection of ground markings on the lane (11) is based.

5. A method according to one of claims 1 to 4, in which the route specification (12) is obtained from a vehicle holding system (10) in a lane (11).

6. A method according to claim 5, wherein the vehicle holding system (10) in a lane (11) on a detection of ground markings on the lane is based.

7. A computer program comprising instructions for performing the method of any preceding claim when said instructions are executed by a processor (20).

8. A computer-readable recording medium having recorded thereon a computer program comprising instructions for performing the steps of the method of any one of claims 1 to 6.

9. A device (2) for assisting the driving of a vehicle traveling in a lane, the device (2) comprising a memory (21) associated with at least one processor (20) configured to perform the steps of the method according to any one of claims 1 to 6.

10. A vehicle (10) with the device (2) according to claim 9.
